Europäisches Patentamt

European Patent Office

Office européen des brevets

(11) Publication number: **0 130 036**
**B1**

(12) **EUROPEAN PATENT SPECIFICATION**

(45) Date of publication of patent specification: **02.08.89**

(21) Application number: **84304131.0**

(22) Date of filing: **19.06.84**

(51) Int. Cl.⁴: **H 04 B 1/20**

(54) Interconnection apparatus.

(30) Priority: **28.06.83 US 508594**
**28.06.83 US 508605**

(43) Date of publication of application:
**02.01.85 Bulletin 85/01**

(45) Publication of the grant of the patent:
**02.08.89 Bulletin 89/31**

(84) Designated Contracting States:
**DE FR GB IT**

(56) References cited:
**EP-A-0 015 797**
**DE-A-2 424 163**
**DE-A-2 453 385**
**US-A-3 245 043**
**US-A-4 047 162**
**PATENTS ABSTRACTS OF JAPAN, vol. 5, no.**
**202 (P-95) 874r, 22nd December 1981; & JP - A -**
**56 124 929 (TOKYO SHIBAURA DENKI K.K.)**
**30-09-1981**
**PATENTS ABSTRACTS OF JAPAN, vol. 6, no.**
**175 (P-141) 1053r, 9th September 1982; & JP -**
**A - 57 90 733 (HITACHI SEISAKUSHO K.K.)**
**05-06-1982**

(73) Proprietor: **RCA LICENSING CORPORATION**
**2 Independence Way**
**Princeton New Jersey 08540 (US)**

(72) Inventor: **Deiss, Michael Scott**
**1154 Canterbury Square North**
**Indianapolis Indiana (US)**
Inventor: **Beyers, Billy Wesley, Jr.**
**8920 Woodcrest Drive**
**Greenfield Indiana (US)**

(74) Representative: **Kennington, Eric Alasdair et al**
**RCA International Limited Burdett House 15-16**
**Buckingham Street**
**London WC2N 6DU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to an audio and/or video component interconnection system and more particularly to a signal bus connection arrangement for selectively distributing video and/or audio signals among the various audio and video components of the system.

With the increased popularity of various home entertainment video components, such as video disc and tape players, home computers and satellite TV receivers, the interconnection of these components has become more complex.

Video and audio components allow users to create their own entertainment systems and to modify them as they desire.

One method for interconnection of these various components is to connect cables by hand between those components which are presently to be used and to manually change the cable connections when it is desired to use other components. This method is obviously unsatisfactory due to the manual re-arranging of cables required each time it is desired to operate the system in a different manner.

Another approach is to couple each component to a plurality of switches, which may be centrally located or distributed. The switches can be manually or remotely controlled to route the various signals between specific ones of the components to enable the system to operate as directed by the user. Although this approach is more satisfactory than the first, it requires extensive cable connections to the switches, which are unsightly, subject to signal discontinuity, and somewhat complicated for the user to set-up and control. Additionally, the complexity of this type of system increases with the addition of future components.

It is desirable to provide a component interconnection system which is relatively easy for the user to set-up and flexible enough to easily allow for future expansion by the user with a simple connection for subsequently added components. Such a system desirably has a minimum amount of signal conductors so as to facilitate relatively simple user set-up and control and to enhance system reliability. At the same time, cost should be minimized. Finally, a preferred system must have the ability to allow several audio and/or video components to operate simultaneously so that a user can maximize utilization of his system.

EP-A-0015797 discloses an interconnection apparatus for separate components of a home entertainment system in which a single signal connector bus is connected in a "daisy-chain" serial manner between the components for transferring a signal between a peripheral component and a television. However, it does not appear to be possible to transfer a first signal between a first pair of components independently from transferring a second signal between a second pair of components using the same single conductor.

It is known from US-A-4047162 that, in the data communications field, data transmission lines within two sub-systems may be joined at an interface which is selectively enabled, so that when the interface is enabled data buses of the two sub-systems form a common bus for transfer of data between a component in one sub-system and a component in the other sub-system, while when the interface is disabled the data bus in the first sub-system may be used for data transfer between components within the first sub-system while the data bus in the second sub-system is used for independent data transfer between components of the second sub-system.

According to the invention there is provided apparatus as set out in Claim 1.

Preferably, a single signal conductor for either a video or audio signal is coupled between signal terminals of various components of an entertainment system in a serial manner for conducting the signal between the components. This arrangement resembles a daisy-chain arrangement in which the components are connected to the signal conductor in a distributed manner.

In one embodiment, an audio/video component interconnection system includes a video signal conductor having a given characteristic impedance for transferring video signal in a serial manner among the video components.

It is herein recognized that when the continuity of the video signal conductor in the above described system is interrupted, provision should be made for proper impedance levels at the discontinuity presented by the non-conductive switch in order to minimize undesired signal reflections.

Preferably a shunt switch arrangement coupled to the video conductor at the junction of the video signal conductor and the series switch, applies a predetermined impedance, preferably substantially equal to the characteristic impedance of the video signal conductor, between the conductor and a reference potential. The shunt switch is conductive when the series switch is non-conductive.

In the drawing:

FIGURE 1 illustrates partially in block diagram form and partially in schematic diagram form an audio and video components interconnection system embodying the invention;

FIGURE 2 and 3 illustrate in schematic diagram form details of portions of FIGURE 1.

FIGURES 4 and 5 illustrate in block diagram form a modularized embodiment of the audio and video component interconnection system embodying the invention.

FIGURE 6 illustrates partially in block diagram form and partially in schematic diagram form a video component interconnection system embodying the invention; and

FIGURES 7 and 8 illustrate in schematic diagram form details of portions of FIGURE 6.

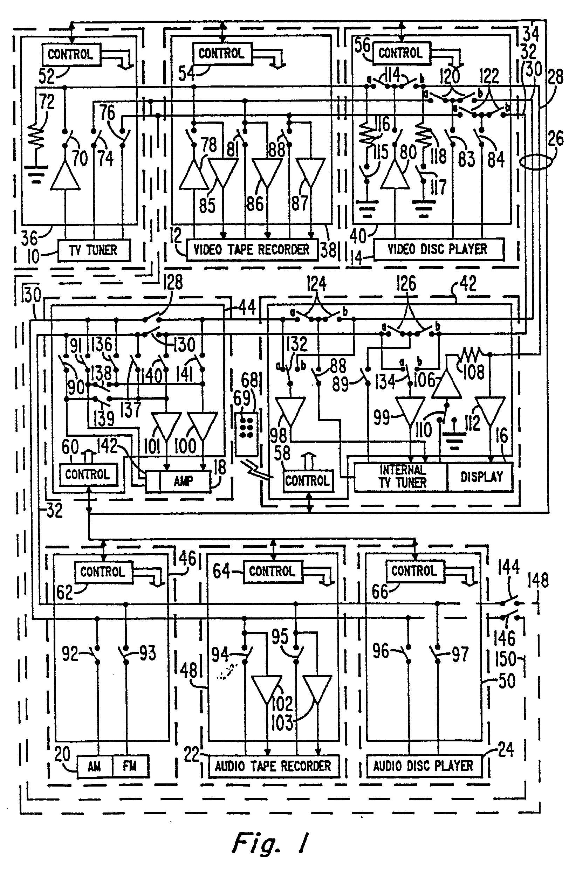

Referring to FIGURE 1, a plurality of video and audio components are shown, each component having an associated connection stage for controlling the transmission and/or reception of video and audio signals to or from other ones of the video and audio components. More specifically, a TV tuner 10, video tape recorder (VTR) 12, video disc player (VDP) 14 and a TV monitor 16, including a display and internal tuner, are shown as examples of typical home video components. An amplifier 18, AM/FM receiver 20, audio tape recorder (ATR) 22 and an audio disc player (ADP) 24 are shown as examples of typical home audio components. A single cable 26, including only three signal conductors or buses and a control conductor or bus, serves to couple the video and audio signals between each component so as to interconnect the component entertainment system. Cable 26 includes a shielded conductor signal bus 28 (of the coaxial cable type) having a 75 ohm characteristic impedance for distributing a baseband video signal, two shielded conductor signal buses 30 and 32 for distributing left and right stereophonic audio signals and a digital signal control bus 34 for distributing control signals among the various components of the system. Although stereophonic audio is not presently telecast, it is believed that it will soon become a reality. Thus, stereophonic audio is provided for in the present description.

Each of the video components 10-16 include a respective connection stage 36-42 for controlling the transmission and/or reception of video and audio between the components through the signal buses of cable 26. Each of the audio components 18-24 include a respective connection stage 44-50 for controlling the transmission and/or reception of audio signals between these components through audio signal buses 30 and 32. As indicated by the dashed lines enclosing each entertainment component and its associated connection stage, each component may have its connection stage incorporated within it.

Video components 10-16 are clustered together and cable 26 connects their respective connection stages together in a "daisy-chain" manner (i.e., cable 26 is connected from one connection stage to the next in a serial fashion). Similarly, audio buses 30 and 32 and control bus 34 interconnect a clustered arrangement of audio components 18-24.

Each of the connection stages includes a logic circuit labelled "control" 52-56, including, e.g., a microcomputer and a read-only-memory for storing a control program (not shown) which is responsive to the control signals transmitted on bus 34 for providing further control signals (as indicated by the broad arrows) for controlling the selective transmission and/or reception of video and/or audio signal between the associated audio or video component and cable 26. Additionally, via a remote control connection (not shown) between each connection stage and its associated component, the output signals control the functional operation of the component.

As will be described in greater detail later on, logic circuit 58 associated with the TV monitor 16 serves as a master logic unit for controlling the operation of the entire component entertainment system. The user may enter commands to the master from, for example, a remote control transmitter 68. Transmitter 68 includes a plurality of pushbuttons 69 for allowing the user to select any component of the entertainment system as a source of audio and/or video signals and any of the remaining components to receive those audio and/or video signals. In response to a received remote control message, the master logic circuit 58 supplies digital control signals to the remaining logic circuits associated with each of the other audio and/or video components through control bus 34 for completing the appropriate transmission and/or reception path.

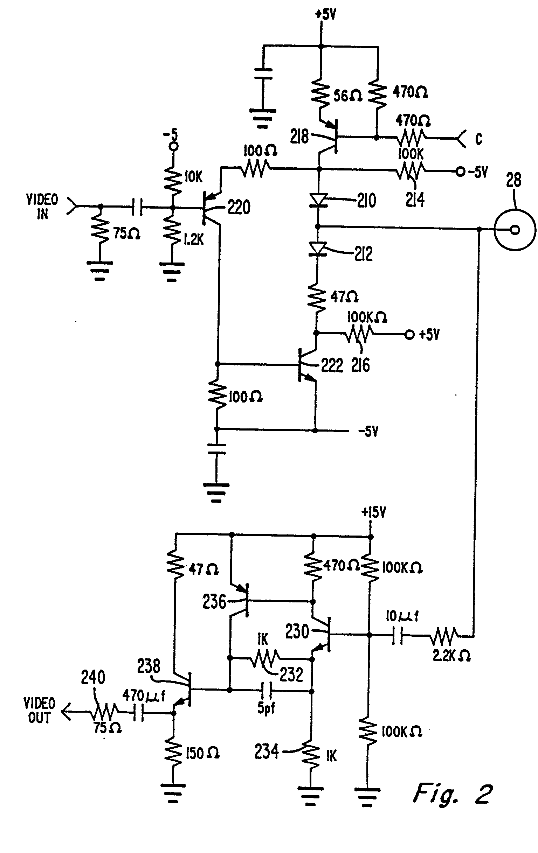

The simplest type of connection stage is one which merely connects a signal source to a signal bus of interconnecting cable 26. TV tuner 10 is one such signal source and supplies a baseband video signal and stereophonic left and right audio signals to signal buses 28, 30 and 32, respectively. For that purpose, connection stage 36 includes a video driver amplifier 70 (described in detail later on with respect to FIGURE 2) for supplying the video signal to bus 28. Driver 70 is responsive to an output signal of logic circuit 52 for providing a low output impedance when supplying a video signal to bus 28 or providing a high output impedance (as functionally represented by the opened switch connected in series with the output of driver 70) when not supplying a video signal to bus 28. The low output impedance (i.e., less than 10 ohms) is necessary in order to supply sufficient signal level to bus 28. The high impedance (i.e., greater than 1 k-ohm) is necessary at the output of driver 70 when it is not supplying a video signal to bus 28, in order to limit the coupling of video signal from bus 28 to ground via driver 70.

Since the frequency of baseband video signals is substantial, i.e., up to 4 MHz, proper terminations should be maintained at the ends of the video bus. The ends of video bus 28 should be terminated in its characteristic impedance in order to minimize video signal reflections which would otherwise manifest themselves as ghosts in the reproduced video. Thus, the end of video bus 28 at connection stage 36 is terminated by a 75 ohm resistor 72 coupled between the center conductor of bus 28 and ground. The other end of video bus 28 is terminated by the video signal driver of connection stage 42, which is described in greater detail later on.

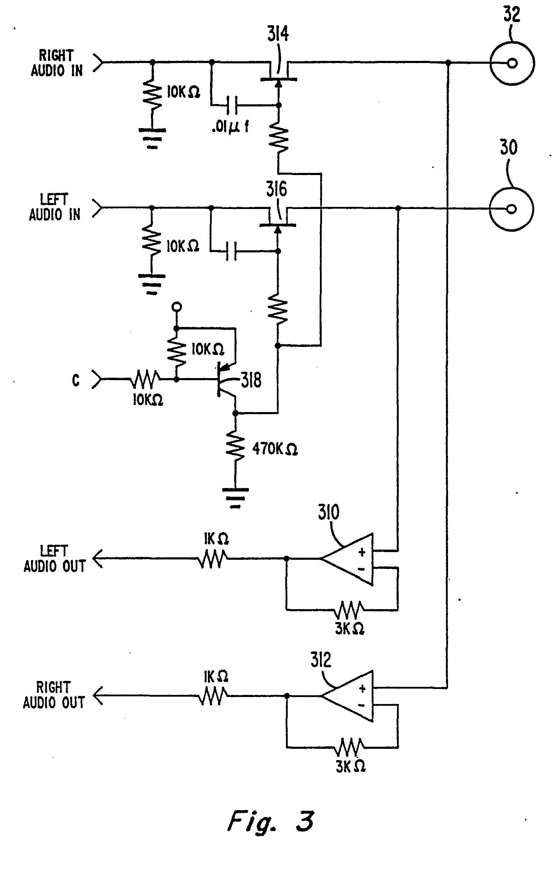

Connection stage 36 also includes selectively conductive switches 74 and 76 for supplying the left and right stereophonic audio signals from TV tuner 10 to audio buses 30 and 32, respectively, in response to control signals from logic circuit 52. Details of circuitry suitable as audio switches 74 and 76 is described in detail with respect to FIGURE 3.

In a similar manner, video and audio signals from VTR 12 and VDP 14 are supplied to buses 28, 30 and 32 via video drivers 78 and 80 and audio switches 81-84 of connection stages 38 and 40, respectively.

Connection stage 38 also includes a high input impedance video signal buffer 85 and two high input impedance audio signal buffers 86 and 87 connected between signal buses 28, 30 and 32 for supplying video and audio signals from these buses to respective record input terminals (not shown) of VTR 12. Since these buffers present high impedance to the signal buses, the signal level on the bus will remain constant regardless of the operating mode of VTR 12.

Similarly, connection stages 42-50 include audio switches 88-97 for supplying left and right stereophonic audio signal to the audio signal buses 30 and 32 and connection stages 42, 44 and 48 include high impedance audio signal buffers 98-103 for supplying audio signal from buses 30 and 32 to the TV monitor 16, amplifier 18 and audio tape recorder 22. A description of the remainder of the audio switches shown in connection stages 42 and 44 will be described later on.

As previously noted, one end of video bus 28 is terminated in its characteristic impedance by a resistor 72 and the other end is terminated by a video signal driver in connection stage 42. At connection stage 42, video signal from the internal tuner portion of monitor 16 is applied to bus 28 via a video signal driver 106 having a 75 ohm output impedance (represented by resistor 108). Driver 106 is described in greater detail with respect to FIGURE 2. A switch 110 has a first position in which the video signal from the internal TV tuner is supplied to bus 28 via driver 106. If, however, video signal is to be received by monitor 16 from bus 28, switch 110 is caused (by control signals from logic circuit 58) to be in a second position which couples the input of driver 106 to signal ground. In this position, driver 106 maintains its 75 ohm output impedance and advantageously serves as the characteristic impedance termination for this end of video bus 28. A high input impedance video signal buffer 112 supplies video signal from bus 28 to the display portion of TV monitor 16 for reproducing the video signal from bus 28.

The interconnection system described thus far is relatively simple, requiring only one signal conductor for distributing video signal among the video components and two signal conductors for distributing stereophonic audio signal among the audio and video components. This provides for the previously noted desirable features of a minimum number of signal conductors, and results in a system that is simple to set-up and operate and is easily expandable. Although a single conductor is used for distributing each of the respective information signals, the system is not restricted to distributing only one signal at a time on each of the respective buses. That is, the desirable feature of allowing simultaneous and independent signal distribution among the components is provided for in this system. This is inexpensively accomplished, without the use of a matrix switching arrangement by breaking the continuity of the respective signal bus into at least two separate segments.

More specifically, connection stage 40 associated with VDP 14 includes two selectively conductive video signal paths which can separate the distribution of video signal originating at the TV tuner 10 or VTR 12 from the TV monitor 16. A switch 114 functionally represents these selectively conductive paths and includes two series connected single-pole, single-throw analog video signal switches 114a and 114b for allowing video signal from VDP 14 to be distributed to either of the separated portions of bus 28. Video signal switches are well known to those skilled in the art and can be constructed in a variety of well known ways.

In operation, the user can operate transmitter 68 to instruct the master controller 58 to have VTR 12 record video signal supplied from TV tuner 10 while, at the same time, video and audio signals from VDP 14 can be sent to the TV monitor 16 for simultaneous viewing. However, as previously noted, proper termination of the ends of video bus should be maintained at all times to minimize signal reflections. When switch 114 is non-conductive it breaks the continuity of bus 28 into two separate segments, effectively forming two new ends. It is desirable to make provision for properly terminating these new ends of video bus 28 when switch 114 is non-conductive. To this end, switch 115 is provided for coupling bus 28 to ground via a 75 ohm resistor 116 when switch 114a is opened and switch 117 is provided for coupling bus 28 to ground via a 75 ohm resistor 118 when switch 114b is opened. For example, when switch 114a is opened and switch 114b is closed in order that TV tuner 10 can supply signals to VTR 12 while VDP 14 can supply signal to TV monitor 16, switch 115 will be closed and switch 117 will be opened.

The continuity of audio signal buses 30 and 32 may also be broken so as to allow simultaneous and independent audio signal distribution among the system components in a manner similar to the breaking of continuity of video bus 28. For this purpose, connection stage 40 includes series switch arrangements 120 and 122, connection stage 42 includes series switch arrangements 124 and 126, and connection stage 44 includes series switches 128 and 130 in buses 30 and 32, respectively, for separating these buses into smaller portions which allow independent and simultaneous audio signal distribution among conponents 10 and 12, 14 and 16, 16 and 18, and 20, 22 and 24 respectively. The construction of selectively conductive audio signal control paths suitable for forming series switches 120-130 are well known to those skilled in the audio signal handling art.

Connection stage 42 also includes single-pole, double-throw switches 132 and 134 for coupling audio signal from either of the portions of audio buses 30ʼ and 32 separated by switches 124 and 126, to loudspeakers (not shown) included in TV monitor 16, via audio signal buffers 98 and 99, respectively.

Finally, connection stage 44 includes selectively conductive signal paths functionally respresented by single-pole, single-throw switches 136-141 in addition to previously mentioned switches 90 and 91, for controlling the coupling of audio signal between either of the portions of buses 30 and 32 separated by switches 128 and 130, and amplifier 18. Low level audio signal may be provided to audio buses 30 and 32 from a source selector switch 142 of amplifier 18 which receives audio signal from e.g., a further phonograph player (not shown).

In operation, in response to remote control messages received from transmitter 68, master controller 58 provides control signals to each of the slave logic units, which in turn control the operation of the previously noted switches and drivers and operating functions of their associated entertainment component, e.g., such as the power on/off status, volume level, channel selection, etc.

For example, remote control messages can be generated to record a TV program, display a stereo video disc with audio amplified by amplifier 18 and record a broadcast FM program, all at the same time. In this case, master controller 58 will instruct the slave logic units, via control bus 34, to supply control signals which cause the following functions to occur.

1. Turn on the appropriate components, i.e., tuner 10, VTR 12, VDP 14, amplifier 18, AM/FM receiver 20 and ATR 22.

2. Break the continuity of the audio and video buses as follows:

   a. Open switches 114a, 120a and 122a and close switches 114b, 120b and 122b.

   b. Close switches 124a and 126a and close switches 124b and 126b.

   c. Open switches 128 and 130.

3. Provide proper termination of the video bus as follows:

   a. Close switch 115, open switch 117 and operate switch 110 so that the input of driver 106 is coupled to ground in order that output impedance 108 of driver 106 serves as a characteristic impedance termination for bus 28.

4. Select the appropriate operating condition of each component as follows:

   a. Set TV tuner 10 to the desired TV channel.

   b. Set VTR 12 to the record mode.

   c. Set VDP 14 to the play mode.

   d. Set the desired volume level of amplifier 18.

   e. Set AM/FM receiver 20 to the desired FM station.

   f. Set ATR 22 to the record mode.

5. Select appropriate signal routing as follows:

   a. Enable video driver 70 to supply video signal to bus 28 and close switches 74 and 76 in order that the video and audio signals from TV tuner 10 can be coupled to the record inputs of VTR 12 via buffers 85, 86 and 87 of connection stage 38.

   b. Enable video driver 80 and switches 83 and 84 of connection stage 36 to supply the video and audio signals from the video disc player 14 to interconnecting cable 26 via closed switches 114b, 120b and 122b. The video signal will be coupled to the display of TV monitor 26 via buffer 112 and the audio signals will be coupled to the amplifier 18 via closed switches 124a and b, 126a and b, 140, 141 and buffers 100 and 101.

   c. Close switches 92 and 93 of connection stage 46 in order to supply the received broadcast FM audio signals to the record inputs of ATR 22 via audio buses 30 and 32 and buffers 102 and 103 of connection stage 48.

The upper portion of FIGURE 2 shows an example of circuitry suitable for constructing video drivers 70, 78 or 80. As previously noted, the video driver must be able to be controlled to selectively provide either a low or a high output impedance.

Each driver includes two series connected pin diodes 210 and 212, the junction therebetween connected to video bus 28. The diodes are initially reversed biased by the application of -5 volts to the anode of diode 210 via resistor 214 and +5 volts to the cathode of diode 212 via a resistor 216. A control transistor 218 receives a signal C at its base which, when at a low logic level, causes transistor 218 to conduct and increase the potential at the anode of pin diode 210. This causes diode 210 to become forward biased and provides current to the emitter of transistor 220, allowing it to conduct the video signal applied at its base to the base of transistor 222. This causes transistor 222 to become conductive and forward biases diode 212, completing the low impedance path for supplying video signal to bus 28. Due to the negative feedback provided by the conduction of transistor 220 and diode 212, the output impedance of the video driver is held low (i.e., less than 10 ohms) and its bandwidth is sufficiently wide for passing the baseband video signal (up to 4 MHz).

When the signal C is at a high logic level, transistor 218 is not conductive and the conduction of transistors 220 and 222 is prevented. Thus, pin diodes 210 and 212 remain reverse biased and present a high impedance to video bus 28. pin diodes are used for establishing the high/low impedance link to bus 28 because of the relatively high impedance they present during their reverse bias condition at video signal frequencies.

The lower portion of FIGURE 2 illustrates circuitry suitable for constructing video buffers 85 and 112 and, video driver 106. The video signal from bus 28 is applied by emitter follower transistor 230 to the junction of equal valued resistors 232 and 234. An opposite conductivity type transistor 236 clamps the voltage at the collector of transistor 230 to approximately 1 $V_{be}$ below 15 volts for stabilizing its operation with respect to temperature variations. The signal level at the junction of resistors 232 and 234 is substantially equal to the signal level at the base of transistor 230 due to its emitter follower operation. Since resistors 232 and 234 are of equal value, the signal level at the junction of resistor 232 and the base of a transistor 238 is twice the input video signal level. Emitter follower transistor 238 provides the output signal. A 75 ohm resistor 240 provides impedance matching to the video signal input terminal of the associated video component. Since the amplifier arrangement has a gain of 2, the 50% signal reduction due to the 75 ohm output impedance is compensated for.

When the circuitry of the lower portion of FIGURE 2 is used as video driver 106, the base of transistor 230 is connected to switch 110 of FIGURE 1 and the 75 ohm resistor 240 corresponds to resistor 108 of FIGURE 1.

The lower portion of FIGURE 3 illustrates circuitry suitable for constructing the audio buffers of the system and the upper portion of FIGURE 3 illustrates circuitry suitable for constructing the various audio switches. The left and right audio buffers comprise respective high input impedance FET operational amplifiers 310 and 312, biased for operation as unity-gain followers for applying the audio signal from buses 30 and 32 to the audio input terminals of the associated audio components. The audio switches comprise respective FET transmission gates, such as 314 and 316 for providing signal paths between the audio output terminals of the associated audio component and the buses 30 and 32. Each transmission gate is enabled to conduct by the conduction of a control transistor 318 in response to the application of a control signal C to its base electrode from the logic unit of the associated connection stage.

Thus, what has been described is an interconnection arrangement for a component entertainment system which has a single signal conductor bus for each information signal, which connects the individual components in "daisy-chain" fashion which allows the information signal to be selectively supplied and/or received from the signal buses in a distributed manner. This arrangement facilitates user set-up, enhances system reliability and provides for expansion for subsequent components in a simple manner. The video and audio components of the system are clustered together on separate sections of the signal buses and series switching elements allow for simultaniety of operation of the separate clusters.

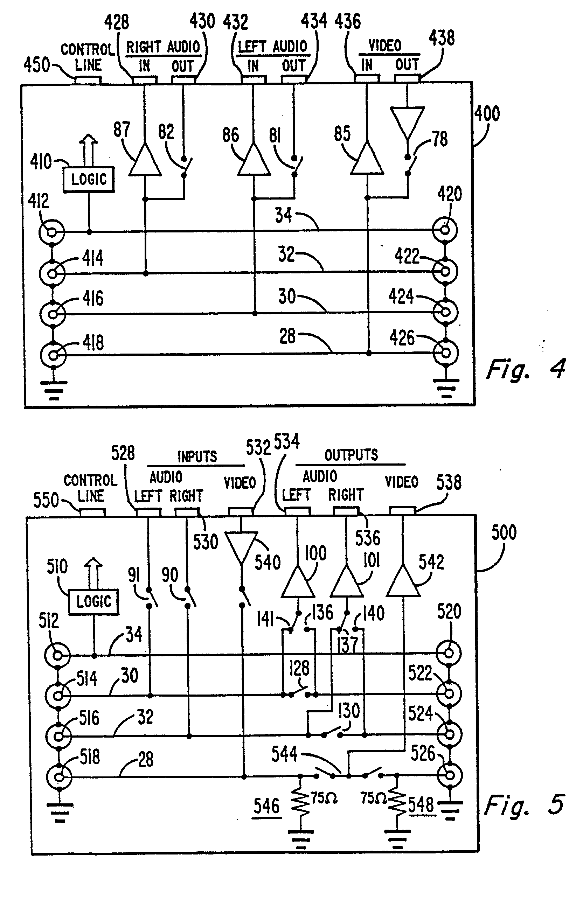

Connections for a modular embodiment of the type of connection stages used in the interconnection system shown in FIGURE 1, are shown in FIGURES 4 and 5. FIGURE 4 shows a generalized interconnection module 400 which does not include provisions for breaking the continuity of the signal buses and FIGURE 5 shows a generalized interconnection module 500 which has such provisions.

For interconnecting the modules with cable 26 to form the "daisy-chain", each module includes bus input and output coaxial terminals 412-426 and 512-526. For connection between each module and its associated component, component input and output terminals 428-432 and 528-532 are provided.

Each of modules 400 and 500 include buffers, drivers and switches which are constructed and operate in the same manner as correspondingly identified elements previously described with respect to FIGURE 1. For example, connection stage 38 associated with the VTR 12 could be provided by module 400 including elements identified by the same reference numbers as connection stage 38 of FIGURE 1. If, however, module 400 was to be used for providing a connection stage for an audio only component, such as connection stage 48 associated with the audio tape recorder 22, only the audio switches and buffers would be used (i.e., video related elements 78, 85, 28, 418 and 426 would be omitted).

Module 500 could be used for providing connection stage 40 which is associated with the VDP 14 of FIGURE 1 and includes provisions for breaking the continuity of signal buses 28, 30 and 32. The video portion of module 500 includes a video driver 540 and video buffer 542 similar to those of FIGURE 2 and a selectively conductive video signal path, functionally represented by series switch 544, for breaking the continuity of video bus 28 and for applying video signals to buffer 542 from either of the separated portions of the bus, such as described with respect to connection stage 40. Resistor switch arrangements 546-548 provide proper characteristic impedance terminations for the separated portions of bus 28 when switch 544 is non-conductive, in a manner similar to that described with respect to connection stage 40. The audio portion of module 500 is substantially similar to connection stage 44 of FIGURE 1, as indicated by the use of the same reference numbers in these FIGURES.

Modules 400 and 500 include logic circuits 410 and 510, respectively, which correspond in function to the slave logic units shown in FIGURE 1. As previously noted, control signal generated by the slave logic units are also coupled to a remote control input of the associated component via a remote control operation line, for remotely controlling the operating functions of the associated component. Modules 400 and 500 include terminals 450 and 550 for providing connection of the remote control lines between the module and the remote control input of its associated component.

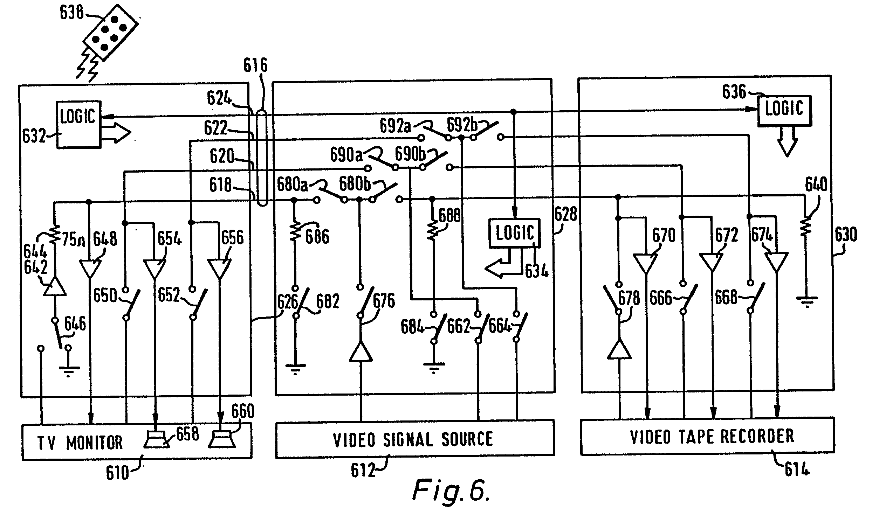

Referring to FIGURE 6, a plurality of video components are shown, each component having an associated connection stage for controlling the transmission and/or reception of video and audio signals to or from other ones of the video components. More specifically, a TV monitor 610, a video signal source 612 and a video tape recorder 614 are shown as examples of typical home video components. Video signal source 612 may comprise a TV tuner and a detector for providing baseband video signals and stereophonic left and right audio signals.

A single cable 616, including only three signal conductors or buses and a control signal conductor or bus, serves to couple the video and audio signals between each component, so as to interconnect the component entertainment system in a "daisy-chain" manner (i.e., cable 616 connects one component to the next in serial fashion). Cable 616 includes a shielded conductor signal bus 618 having a 75 ohm characteristic impedance (i.e., bus 618 is a 75 ohm coaxial cable) for distributing a baseband video signal, two shielded conductor signal buses 620 and 622 for distributing the stereophonic left and right audio signals and a digital control signal bus 624 for distributing control signals among the various components.

Each of components 610-614 has an associated connection stage 626-630. Each connection stage includes a logic circuit 632-636 including e.g., a microcomputer and a read-only-memory (not shown), which is responsive to the control signals transmitted on bus 624 for providing further control signals (as indicated by the broad arrows) for selectively controlling the conductivity of signal switches and drivers (to be described later) to selectively control the transmission and/or reception of video and audio signal between the associated video components and cable 616. Additionally, a remote control conductor (not shown) is connected between each connection stage and its associated video component, for coupling a remote control signal to the respective video component for controlling its function.

Logic circuit 632 associated with the TV monitor 610 serves as a master logic unit for controlling the operation of the entire entertainment system. The user may transmit commands to the master from a remote control transmitter 638. Transmitter 638 includes a plurality of push buttons for allowing the user to select any component of the entertainment system as a source of audio and video signals and any of the remaining components as a receiver of those signals. In response to received commands; the master logic circuit 632 supplies digital control signals to the remaining logic circuits associated with each of the video components via control bus 624 for controlling the operation of the component entertainment system.

TV monitor 610 includes an internal TV tuner portion for supplying baseband video signal and left and right stereophonic audio signals to buses 618, 620 and 622, respectively, and a display and loudspeaker portion for reproducing the video and audio signals fromthese buses.

Since the frequency of baseband video signals is substantial, i.e., up to 4 MHz, proper terminations must be maintained for the ends of video bus 618. The ends of bus 618 must be terminated in the given characteristic impedance of the coaxial cable (i.e., 75 ohms) in order to minimize video signal reflections which would otherwise manifest themselves as ghosts in a reproduced image. One end of video bus 618 (near connection stage 630 associated with VTR 614) is terminated in its characteristic impedance by a 75 ohm resistor 640.

The other end of bus 618 is terminated in connection stage 626 wherein video signal from the internal TV tuner portion of monitor 610 is applied to bus 618 via a video signal driver 642 in the following manner. Driver 642 has a 75 ohm output impedance (represented by resistor 644). A switch 646 has a first position in which the video signal from the internal TV tuner is supplied to bus 618 via driver 642. If, however, video signal is to be received by monitor 610 from bus 618, switch 646 is caused (by control signals from logic circuit 632) to be in a second position which couples the input of driver 642 to signal ground. In this position, driver 642 maintains its 75 ohm output impedance and advantageously serves as the characteristic impedance termination for this end of video bus 618.

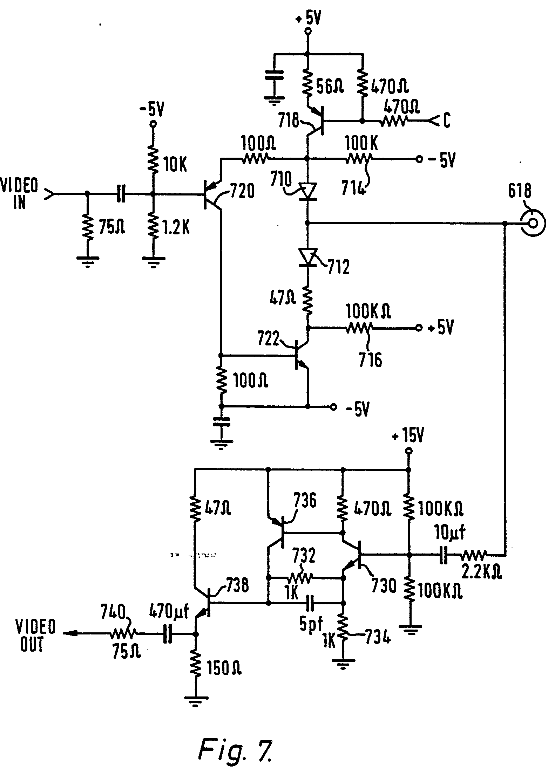

A high input impedance video signal buffer 648 supplies video signal from bus 618 to the display portion of TV monitor 610 for producing an image in response to the video signal from bus 618. Circuit embodiments for driver 642 and buffer 648 are described with respect to FIGURE 7.

Connection stage 626 also includes selectively conductive switches 650 and 652 for supplying the left and right stereophonic audio signals from TV monitor 610 to audio buses 620 and 622, respectively, in response to control signals from logic circuit 632. Additionally, two high input impedance audio buffers 654 and 656 are connected to audio buses 620 and 622 for supplying audio signal from these buses to an audio amplifying portion (not shown) of TV monitor 610 for subsequent reproduction by loudspeakers 658 and 660.

Connection stages 628 and 630, respectively, associated with video signal source 612 and video tape recorder 614 also include audio switches 662, 664 and 666, 668 for applying the stereophonic audio signals from source 612 and video tape recorder 614 to audio buses 620 and 622. Connection stage 630 additionally includes video and audio signal buffers 670, 672 and 674 for applying video and audio signal from buses 618, 620 and 622 to the record inputs of video tape recorder 614. Since these buffers present a high impedance to the signal buses, the signal level of each bus will remain constant regardless of the operating mode of the associated video component.

For supplying a video signal from signal source 612 or from video tape recorder 614 to video bus 618, connection stages 628 and 630 include respective video driver amplifiers 676 and 678 (the circuit embodiments of which are described with respect to FIGURE 7). Drivers 676 and 678 are responsive to output signals of logic circuits 634 and 636, respectively, for providing a low output impedance when supplying signal to bus 618 or providing a high output impedance (as functionally represented by the opened series switch of drivers 676 and 678) when not supplying signal to bus 618. The low output impedance (i.e., less than 10 ohms) is desirable in order to supply sufficient signal level to bus 618. The high impedance (i.e., greater than 1k ohm) is desirable at the output of drivers 676 and 678 when they are not supplying video signal to bus 618, in order to limit the attenuation of video signals on bus 618.

Connection stage 628 associated with video source 612 includes a switch arrangement 680 coupled in series with video bus 618 which can prevent the distribution of video signal originating from either the internal TV tuner of monitor 610 or the video tape recorder 614 from passing to video source 612 by separating video bus 618 in two separate sections. Switch 680 includes two series connected single-pole, single-throw analog video signal switches 680a and 680b, for allowing video signal from source 612 to be distributed to either of the separated portions of bus 618. Similarly, switches 690 and 692 represent selectively conductive audio signal paths coupled in series with audio buses 620 and 622, respectively, for separating audio buses 620 and 622 into separate sections.

In operation, the user can operate transmitter 638 to transmit commands to master controller 632 which will instruct video tape recorder 614 to record video and audio signals supplied from source 612, while at the same time video and audio signals from the internal TV tuner of monitor 610 will be reproduced by the display and loudspeaker portion of TV monitor 610. This is accomplished by causing switches 680a, 690a and 692a to be non-conductive.

As previously noted, proper termination of the video bus should be maintained at all times to minimize signal reflections. When switch 680a is non-conductive it effectively breaks the continuity of bus 618 into two separate sections, and it is therefore desirable to properly terminate these sections of bus 618 under these conditions. In accordance with a further aspect of the present invention, a shunt switch arrangement is conductive when series switch 680 is non-conductive, so as to properly terminate the ends of the sections of bus 618 formed on respective sides of switch 680 so as to reduce video signal reflections.

More specifically, two more switches 682 and 684, are located on respective sides of switch 680 for coupling bus 618 to a ground reference potential via 75 ohm resistors 686 and 688, respectively, when switches 680a and 680b are non-conductive, respectively. In accordance with the previous example, switch 680 may be used to separate the continuity of bus 618 in order that the display of TV monitor 610 receives video signal from its internal TV tuner, while source 612 supplies signal to the video tape recorder 614. In this case, switch 680b will be conductive so as to pass video signal from source 612 to the video tape recorder 614 and switch 684 will be non-conductive. However, since switch 680a will be non-conductive so as to prevent intermingling of video signal from the internal TV tuner with signal from source 612, switch 682 will be conductive, so as to terminate the end of video bus 618 which is formed by the non-conduction of switch 680a in its characteristic impedance. Thus, reflection of the video signal due to the discontinuity presented by the non-conduction of switch 680a is prevented.

In operation, master logic 632 provides output signals to each of the slave logic units, which in turn control the conductivity of each of the previously noted switches and video drivers and the operating function of their associated video component (via previously the noted remote control conductor, not shown), in response to user commands transmitted from remote control transmitter 638. For example, if video signal source 612 was a second TV tuner, the user could instruct master logic 632 that it is desired to view a TV program using the internal tuner of monitor 610 while, at the same time, recording a TV program received from video source 612. The master logic 632 will instruct the slave logic units to supply output signals in a manner analogeously to that described in connection with master controller 58 in the FIGURE 1 embodiment.

The upper portion of FIGURE 7 shows an example of circuitry suitable for constructing video drivers 776 and 778. As previously noted, the video driver should be able to be controlled to selectively provide either a low or a high output impedance.

The driver circuitry includes two series connected pin diodes 710 and 712. The junction between diodes 710 and 712 is connected to video bus 618. The diodes are reversed biased by applying -5 volts to the anode of diode 710 via a resistor 714 and +5 volts to the cathode of diode 712 via a resistor 716. A control transistor 718 receives a signal C at its base which, when at a low logic level, causes transistor 718 to conduct and increase the potential at the anode of pin diode 710. This causes diode 710 to become forward biased and provides current to the emitter of transistor 720 biasing it on, so as to conduct the video signal applied at its base to the base of transistor 722. The conduction of transistor 720 biases transistor 722 for conduction which, lowers the potential at the cathode of diode 712, causing it to become forward biased. At this point, the video signal at the base of transistor 720 is coupled to output terminal 618. Due to the negative feedback provided by the conduction of transistor 720 and diode 710, the output impedance of the video driver is held low (i.e., less than 10 ohms) and its bandwidth is sufficiently wide for passing the baseband video signal (up to 4 MHz).

When the signal C is at a high logic level, transistor 718 is not conductive and the conduction of transistors 720 and 722 is prevented. Thus, pin diodes 710 and 712 remain reverse biased and present a high impedance to video bus 618. Pin diodes are used for establishing the high/low impedance link to bus 618 because of the relatively high impedance they present at video signal frequencies during their reverse bias condition.

The lower portion of FIGURE 7 illustrates circuitry suitable for constructing video buffer 670 and video driver 642. In the case of buffer 670, the video signal from bus 618 is applied by emitter follower transistor 730 to the junction of equal valued resistors 732 and 734. An opposite conductivity type transistor 736 clamps the voltage at the collector of transistor 730 to approximately 1 $V_{be}$ below 15 volts for stabilizing its operation with respect to temperature variations. The signal level at the junction of resistors 732 and 734 is substantially equal to the signal level at the base of transistor 730 due to its emitter follower operation. Since resistors 732 and 734 are of equal value, the signal level at the junction of resistor 732 and the base of a transistor 738 is twice the input video signal level. Emitter follower transistor 738 provides the output, signal. A 75 ohm resistor 740 provides impedance matching to the video signal input terminal of the associated video component.

When the circuitry of the lower portion of FIGURE 7 is used as video driver 642, the base of transistor 730 is connected to switch 646 of FIGURE 6 and the 75 ohm resistor 740 corresponds to resistor 644 of FIGURE 6. Since the amplifier arrangement has a gain of 2, the 50% reduction in signal amplitude due to the 75 ohm output impedance is compensated for.

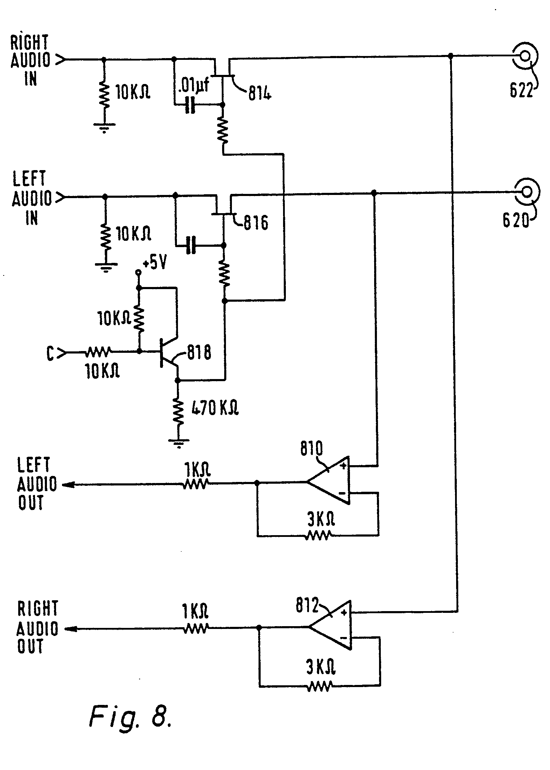

The lower portion of FIGURE 8 illustrates circuitry suitable for constructing the audio buffers of the system and the upper portion of FIGURE 8 illustrates circuitry suitable for constructing the various audio switches. The left and right audio buffers comprise respective high input impedance FET operational amplifiers 810 and 812, biased for operation as unity-gain followers for applying the audio signals from buses 620 and 622 to the audio input terminals of the associated audio components. The audio switches comprise FET transmission gates, such as 814 and 816 for providing signal paths between the audio output terminals of the associated audio component and the buses 620 and 622. Each transmission gate is enabled to conduct by the conduction of a control transistor 818 in response to the application of a control signal C to its base electrode from the logic unit of the associated connection stage.

Thus, what has been described is an interconnection arrangement for a component entertainment system which has a single signal conductor bus for each of the audio and video signals which connects the individual components in a "daisy-chain" fashion and facilitates user set-up, enhances system reliability and provides for simple expansion for subsequently added components. For allowing simultaneous and independent distribution of the video signal among the video components, a series switch arrangements is provided to break the continuity of the video bus into two separate sections, each section interconnecting different ones of the video components. A shunt switch coupled to the video bus at the point where its continuity is broken, applies a characteristic impedance termination to the bus for reducing signal reflection caused by the discontinuity presented by the series switch. Furthermore, at one end of the video bus, a video signal driver is provided which maintains a given output impedance corresponding to the bus characteristic impedance, when supplying video signal to the bus, and continues to maintain the characteristic impedance so as to terminate the bus in its characteristic impedance, when not supplying video signal to the bus.

Although a particular arrangement of switches has been shown, other arrangements are possible within the scope of the present invention. For example, although two series connected switches 114a and 114b are shown in FIGURE 1, for breaking the continuity of video bus 28, it is to be understood that a single series switch such as 114a could be used for breaking the continuity of video bus 28.

Also, in reference to the FIGURE 6 embodiment, which has been illustrated in terms of two series connected switches 680a, b for breaking the continuity of video bus 618 and two switched resistor terminations 682, 686 and 684, 688, it is to be understood that a single series switch such as 680a could be used for breaking the continuity of video bus 618, in which case only one shunt switch arrangement 682, 686 would be required. It is also to be understood that the impedance required to effectively reduce signal reflection on the video bus is not required to be exactly equal to the given characteristic impedance, such as shown in FIGURE 6.

Additionally, further signal switches could be added to the interconnection system for allowing even greater simultaneity of operation. For example, with reference to FIGURE 1, again two series audio switches 142 and 144 can be used to couple together the ends of audio buses 30 and 32 at connection stage 36 to the ends at connection stage 50, so as to form a circular bus configuration, as indicated by dashed lines 146 and 148 in FIGURE 1. These and other modifications are considered to be within the scope of the following claims.

**Claims**

1. Interconnection apparatus for separate components (10-24; 610-614) of a home entertainment system, for selectively connecting a first group of components, a second group of components, and a third component (14, 16, 18; 612) via a single signal conductor (28, 30, 32; 618, 620, 622) for transferring an information signal produced by one of said components to at least one other of said components, comprising:

connection means (36, 38, 40, 42, 44, 46, 48, 50; 626, 628, 630) adapted for coupling with respective ones of said components for connecting signal inputs and/or outputs of said components to said single conductor at distributed locations along said single conductor; and characterized by

switch means (114, 120, 122, 124, 126, 128, 130;

680; 690; 692) connected in series with said single conductor for selectively separating said conductor into first and second segments so as to allow simultaneous and independent information signal transfer among components connected to the same one of said first and second segments, and having a plurality of positions for selectively coupling

a) said first group of components to said second group of components,

b) said third component to both of said first and second groups,

c) said third component to only one of said first group of components and said second group of components.

2. Apparatus according to Claim 1, in which said switch means is located at one of said distributed locations.

3. Apparatus according to Claim 1 or Claim 2 in which said home entertainment system includes video components (10, 12, 14, 16; 610, 612, 614) and said single conductor transfers video signal to video signal inputs and/or outputs of said video components.

4. Apparatus according to Claim 3 in which said single signal conductor (28; 618) has a characteristic impedance for transferring a video signal produced by one of said components (10, 12, 14; 612, 614) to at least one other (16; 610) of said components;

and in which said switch means includes shunt switch means (117; 682) coupled in shunt between said video conductor at its junction at least with one end of said first switch means and a reference potential (GND), for applying, when conductive, an impedance (118; 686) to said video conductor at said junction so as to reduce video signal reflection from said junction, said shunt switch means being conductive when said switch means is non-conductive.

5. Apparatus according to Claim 4 for separate video components of a home entertainment system in which said connection means is associated with each of said video components for controlling the supply and/or receipt of video signal to or from said associated video component and said single conductor comprises a video signal transmission path (28; 618) having first and second ends and a given characteristic impedance for coupling said connection means in series and transferring said video signals therebetween; apparatus for terminating one end of said transmission path in said given characteristic impedance comprising:

the connection means (36, 40, 42; 626, 628, 630) for an associated video component (10, 14, 16; 610, 612, 614) which is coupled at said one end, said end connection means including a video signal driver (80, 106; 642, 676) having an output impedance substantially equal to said given characteristic impedance and coupled to said transmission path for supplying video signal from said end video component to said transmission path.

6. Apparatus according to Claim 4 or Claim 5 in which said shunt switch means comprises:

a series connection of a resistor (118; 686) having an impedance substantially equal to said characteristic impedance and a selectively conductive video signal switch (117; 682) coupled between said video conductor and said reference potential.

7. Apparatus according to Claim 6 in which said shunt switch means (117; 682) is coupled to said video conductor at its junction with both ends of said switch means.

8. Apparatus according to any of Claims 4 to 7, in which a portion of said video conductor (28; 618), a respective one of said connection means, said first switch means and said shunt switch means are located in a single housing.

9. Apparatus according to Claim 8, in which said housing is adapted to transmit and/or receive video signals from other video components of said entertainment system via said first and second segments of said video conductor; and said shunt switch means is coupled to the ends of said first and second segments of said video conductor located within said housing.

10. Apparatus according to Claim 5, in which said end connection means includes a switch arrangement (110;646) having a first position for coupling video signal from said end video component to the input of said video signal driver for supplying video signal from said end video component to said transmission path, and a second position for coupling a first reference potential (GND) to said input of said video driver so as to maintain said given characteristic impedance as said output impedance for terminating said transmission path in said given characteristic impedance when said video driver is not supplying video signal to said transmission path.

11. Apparatus according to Claim 10, in which said switch is caused to be in said second position when a video signal is being received by said end video component from said transmission path.

12. Apparatus according to Claim 1, in which said home entertainment system includes audio (20; 22; 24) and video (10; 12; 14; 16) components and said single conductor transfers audio signals between audio inputs and outputs of the audio and video components.

13. Apparatus according to Claim 12, in which audio signal inputs and/or outputs of all of said audio components are connected to said audio conductor (30; 620) along a first portion of said conductor and audio signal inputs and/or outputs of all of said video components are connected to said audio conductor along a second portion of said conductor.

14. Apparatus according to Claim 13, in which said switch means includes a first audio switch (120, 124, 128; 690) connected in series with said audio signal conductor (30; 620) and located at one of said distributed locations such that said first and second portions of said audio signal conductor correspond to said first and second segments.

15. Apparatus according to Claim 14, in which said audio signal comprises left and right stereophonic audio signals, said first mentioned audio signal conductor for transferring said left audio signal to said components; and further including a second single signal conductor (32; 622) for transferring said right stereophonic audio signal to said components of said entertainment system.

16. Apparatus according to Claim 15, in which said audio switch means includes a second audio switch (122, 126, 130; 692) in series with said second audio conductor; and said first and second switches selectively separate said first mentioned and second audio conductors, concurrently.

17. Apparatus according to Claim 16, in which said first and second audio switches are all located at the same one of said distributed locations and operate concurrently for selectively separating said audio signal conductors.

18. Apparatus according to any of Claims 14 to 17 in which signal inputs and/or outputs of an audio signal amplifier component are connected to said audio signal conductor at said one distributed location.

19. Apparatus according to any of Claims 14 to 18, in which audio signal inputs and/or outputs of a television monitor (16), including internal audio signal amplifier and loudspeaker portions, are connected to said audio signal conductor (30; 32) at a distributed location adjacent to said one distributed location.

20. Apparatus according to any one of Claims 12 to 19 which comprises a second single signal conductor (28; 618) for transferring a video signal produced by one of said video components to at least one other of said video components;

said connection means associated with said video components connecting video signal inputs and/or outputs of said video components to said video signal conductor at distributed locations along said video signal conductor; and a video switch means (114; 680) located in series with said video signal conductor for selectively separating said video conductor into first and second video conductor segments so as to allow simultaneous and independent video signal transfer among said video components connected to said first and second video conductor segments.

21. Apparatus according to Claim 20, in which said video switch means is located at one of said distributed locations of said video conductor.

22. Apparatus according to Claim 21, in which said one distributed location is associated with a predetermined connection means located adjacent connection means associated with two other video (12, 16; 610, 614) components.

23. Interconnection apparatus according to claim 1 adapted for transferring audio and video signals between separate audio and video components of a home entertainment system, and wherein said single signal conductor is arranged in first and second portions, respectively, comprising a single signal conductor (30; 32) adapted for transferring an audio signal produced by one of said components (16; 20; 22; 24) to at least one other of said components,

and a single signal conductor (28) adapted for transferring a video signal produced by one of said video components (10; 12; 14; 16) to at least one other of said video components,

said connection means being adapted to be associated with respective ones of said audio and video components for connecting audio and/or video signal inputs and/or outputs of said components to said audio and video signal conductors, respectively;

and said switch means comprising audio and video switch means connected in series with said audio and video signal conductors, respectively, for selectively separating said conductors into said first and second segments so as to allow simultaneous and independent video and audio signal transfer among components adapted to be connected to the same one of said first and second segments of said conductors.

**Patentansprüche**

1. Verbindungsvorrichtung für getrennte Komponenten (10-24; 610-614) einer Heim-Unterhaltungsanlage, zum wahlweisen Verbinden einer ersten Gruppe von Komponenten, einer zweiten Gruppe von Komponenten und einer dritten Komponente (14, 16, 18; 612) über einen einzigen Signalleiter (28, 30, 32; 618, 620, 622) zum Übertragen eines durch eine dieser Komponenten erzeugten Informationssignals zu mindestens einer anderen dieser Komponenten, mit:

einer mit entsprechenden dieser Komponenten koppelbaren Verbindungsanordnung (36, 38, 40, 42, 44, 46, 48, 50; 626, 628, 630) zum Verbinden von Signaleingängen und/oder -ausgängen dieser Komponenten mit dem einzigen Leiter an verteilten Stellen längs dieses einzigen Leiters, gekennzeichnet durch

eine Schalteranordnung (114, 120, 122, 124, 126, 128, 130; 680; 690; 692), welche mit dem einzigen Leiter in Reihe geschaltet ist, um diesen Leiter wahlweise in einen ersten und einen zweiten Abschnitt aufzuteilen, um eine gleichzeitige und unabhängige Informationssignalübertragung zwischen Komponenten, die mit dem gleichen dieser beiden Abschnitte verbunden sind, zu ermöglichen, und welche mehrere positionen zur wahlweisen Kopplung

a) der ersten Gruppe von Komponenten mit der zweiten Gruppe von Komponenten,

b) der dritten Komponenten sowohl mit der ersten als auch mit der zweiten Gruppe,

c) der dritten Komponente mit nur der ersten oder der zweiten Gruppe von Komponenten aufweist.

2. Vorrichtung nach Anspruch 1, bei welcher die Schalteranordnung an einer der verteilten Stellen angeordnet ist.

3. Vorrichtung nach Anspruch 1 oder 2, bei welcher die Heim-Unterhaltungsanlage Videokomponenten (10, 12, 14, 16; 610, 612, 614) enthält und der einzige Leiter Videosignale zu Videosignal-Eingängen und/oder Ausgängen der Videokomponenten überträgt.

4. Vorrichtung nach Anspruch 3, bei der der einzige Signalleiter (28; 680) einen Wellenwiderstand zur Übertragung eines von einer der Komponenten (10, 12, 14; 612, 614) erzeugten Videosignals zu mindestens einer anderen (16; 610) dieser Komponenten aufweist;

und bei der die Schalteranordnung eine Überbrückungsschalteranordnung (117; 682) enthält, die als Überbrückung zwischen den Videoleiter an seiner Verbindung mindestens mit einem Ende der ersten Schalteranordnung und ein Referenzpotential (Masse) gekoppelt ist, um im leitenden Zustand eine Impedanz (118; 686) an den Videoleiter an der Verbindung anzulegen, um die Reflexion von Videosignalen von der Verbindung zu verringern, wobei die Überbrückungsschalteranordnung leitfähig ist, wenn die Schalteranordnung nicht leitfähig ist.

5. Vorrichtung nach Anspruch 4 für getrennte Videokomponenten einer Heim-Unterhaltungsanlage, in welcher die Verbindungsanordnung jeder der Videokomponenten zugeordnet ist, um die Abgabe und/oder den Empfang von Videosignalen von oder zu der zugeordneten Videokomponente zu steuern und bei welcher der einzige Leiter eine Videosignalübertragungsstrecke (28; 618) mit einem ersten und einem zweiten Ende sowie einem vorgegebenen Wellenwiderstand enthält, um die Verbindungsvorrichtung in Reihe zu schalten und die Videosignale dazwischen zu übertragen; mit einer Einrichtung zum Abschließen eines Endes der Übertragungsstrecke mit dem vorgegebenen Wellenwiderstand, enthaltend:

die Verbindungsanordnung (36, 40, 42; 626, 628, 630) für eine zugeordnete Videokomponente (10, 14, 16; 610, 612, 614), die mit dem erwähnten einen Ende gekoppelt ist, wobei die Endverbindungsanordnung einen Videosignaltreiber (80, 106; 642, 676) enthält, der eine Ausgangsimpedanz hat, die im wesentlichen gleich dem vorgegebenen Wellenwiderstand ist, und der mit der Übertragungsstrecke gekoppelt ist, um ein Videosignal von der Videoendkomponente auf die Übertragungsstrecke zu koppeln.

6. Vorrichtung nach Anspruch 4 oder 5, bei der die Überbrückungsschalteranordnung enthält:

eine Reihenschaltung eines Widerstandes (118; 686) mit einer Impedanz, die im wesentlichen gleich dem Wellenwiderstand ist, und eines selektiv leitfähigen Videosignalschalters (117; 682), der zwischen den Videoleiter und das Referenzpotential gekoppelt ist.

7. Vorrichtung nach Anspruch 6, bei welcher die Überbrückungsschalteranordnung (117; 682) mit dem Videoleiter an dessen Verbindung mit den beiden Enden der Schalteranordnung gekoppelt ist.

8. Vorrichtung nach einem der Ansprüche 4 bis 7, bei welcher ein Teil des Videoleiters (28; 618), eine entsprechende Verbindungsanordnung, die erste Schalteranordnung und die Überbrückungsschalteranordnung in einem einzigen Gehäuse untergebracht sind.

9. Vorrichtung nach Anspruch 8, bei welcher das Gehäuse zum Senden und/oder Empfangen von Videosignalen von anderen Videokomponenten der Heim-Unterhaltungsanlage über den ersten und den zweiten Abschnitt des Videoleiters ausgebildet ist; und daß die Überbrückungsschalteranordnung mit den Enden des ersten und des zweiten Abschnitts des Videoleiters, die sich in dem genannten Gehäuse befinden, gekoppelt ist.

10. Vorrichtung nach Anspruch 5, bei welcher die Endverbindungsanordnung eine Schaltereinrichtung (110, 646) enthält, welche eine erste Position zum Koppeln eines Videosignales von der genannten Endvideokomponente zum Eingang des Videosignaltreibers, um ein Videosignal von der Videoendkomponente auf die Übertragungsstrecke zu liefern, aufweist und ferner eine zweite Stellung zum Koppeln eines ersten Referenzpotentials (Masse) an den Eingang des Videotreibers, um den vorgegebenen Wellenwiderstand als die genannte Ausgangsimpedanz aufrechtzuerhalten, um die Übertragungsstrecke mit dem vorgegebenen Wellenwiderstand abzuschließen, wenn der Videotreiber kein Videosignal auf die Übertragungsstrecke liefert.

11. Vorrichtung nach Anspruch 10, bei welcher der Schalter veranlaßt wird, die zweite Stellung einzunehmen, wenn die genannte Videoendkomponente ein Videosignal von der Übertragungsstrecke empfängt.

12. Vorrichtung nach Anspruch 1, bei welcher die Heim-Unterhaltungsanlage Audio- (20; 22; 24) und Video- (10; 12; 14; 16) Komponenten enthält und der einzige Leiter Audiosignale zwischen Audio-Eingängen und -Ausgängen der Audio- und Videokomponenten überträgt.

13. Vorrichtung nach Anspruch 12, bei welcher Audio-Signaleingänge und/oder -ausgänge aller Audio-Komponenten mit dem Audio-Leiter (30; 620) längs eines ersten Teiles dieses Leiters verbunden sind und Audio-Signaleingänge und/oder -ausgänge aller Video-Komponenten mit dem Audio-Leiter längs eines zweiten Teiles dieses Leiters verbunden sind.

14. Vorrichtung nach Anspruch 13, bei welcher die Schalteranordnung einen ersten Audio-Schalter (120, 124, 128; 690), der in Reihe mit dem Audio-Signalleiter (30; 620) geschaltet und an einer der verteilten Stellen angeordnet ist, so daß der erste und der zweite Teil des Audio-Signalleiters dem ersten und dem zweiten Abschnitt entsprechen.

15. Vorrichtung nach Anspruch 14, bei welcher das Audio-Signal ein linkes sowie ein rechtes stereophones Audio-Signal enthält und der ersterwähnte Audio-Signal-leiter zur Übertragung des linken Audio-Signals zu den Komponenten dient; und welche weiterhin einen zweiten einzelnen Signalleiter (32; 622) zum Übertragen des rechten stereophonischen Audio-Signals zu den Komponenten der Heim-Übertragungsanlage enthält.

16. Vorrichtung nach Anspruch 15, bei welcher die Audio-Schalteranordnung einen zweiten Audio-Schalter (122, 126, 130; 692) in Reihe mit dem zweiten Audio-Leiter enthält; und der erste und der zweite Schalter wahlweise den ersten und den zweiten Audio-Leiter gleichzeitig trennen.

17. Vorrichtung nach Anspruch 16, bei welcher der erste und der zweite Audio-Schalter an derselben der verteilten Stellen angeordnet sind und zur selektiven Trennung der Audio-Signalleiter gleichzeitig arbeiten.

18. Vorrichtung nach einem der Ansprüche 14 bis 17, bei welcher Signaleingänge und/oder -ausgänge einer Audio-Signalverstärkerkomponente mit dem Audio-Signalleiter an der einen verteilten Stelle verbunden sind.

19. Vorrichtung nach einem der Ansprüche 14 bis 18, bei welcher Audio-Signaleingänge und/oder -ausgänge eines Fernsehmonitors (16), der einen internen Audio-Signalverstärker- und Lautsprecherteil enthält, mit dem Audio-Signalleiter (30; 32) an einer verteilten Stelle verbunden sind, die der genannten einen verteilten Stelle benachbart ist.

20. Vorrichtung nach einem der Ansprüche 12 bis 19, welche einen zweiten einzelnen Signalleiter (28; 618) zum Übertragen eines durch eine der Videokomponenten erzeugten Videosignales auf mindestens eine andere der Videokomponenten enthält;
wobei die Verbindungsanordnung, die den Videokomponenten zugeordnet ist, Videosignaleingänge und/oder -ausgänge der Videokomponenten mit dem Videosignalleiter an verteilten Stellen längs des Videosignalleiters verbindet; und eine Videoschalteranordnung (114, 680) in Reihe mit dem Videosignalleiter angeordnet ist, um den Videosignalleiter wahlweise in einen ersten und einen zweiten Videoleiterabschnitt aufzutrennen, um eine gleichzeitige und unabhängige Videosignalübertragung zwischen den Videokomponenten, die mit dem ersten und dem zweiten Videoleiterabschnitt verbunden sind, zu ermöglichen.

21. Vorrichtung nach Anspruch 20, bei welcher die Videoschalteranordnung an einer der verteilten Stellen des Videoleiters angeordnet ist.

22. Vorrichtung nach Anspruch 21, bei der die eine verteilte Stelle einer vorgegebenen Verbindungsanordnung zugeordnet ist, die einer zwei anderen Videokomponenten (12, 16; 610, 614) zugeordneten Verbindungsanordnung benachbart ist.

23. Verbindungsvorrichtung nach Anspruch 1, zum Übertragen von Audio- und Videosignalen zwischen getrennten Audio- und Videokomponenten einer Heim-Übertragungsanlage, wobei der einzige Signal leiter in einem ersten bzw. einem zweiten Teil angeordnet ist, mit einem einzigen Signalleiter (30; 32) zum Übertragen eines Audio-Signals, das durch eine der Komponenten (16; 20; 22; 24) erzeugt worden ist, zu mindestens einer anderen dieser Komponenten, und
einem einzigen Signalleiter (28) zum übertragen eines Videosignals, das durch eine der Videokomponenten (10; 12; 14; 16) erzeugt worden ist, zu mindestens einer anderen dieser Videokomponenten,
wobei die Verbindungsanordnung für eine Zuordnung zu entsprechenden Audio- und Videokomponenten geeignet ist, um Audio- und/oder Video-Signaleingänge und/oder -ausgänge dieser Komponenten mit den Audio- bzw. Videosignalleitern zu verbinden;
und die Schalteranordnung Audio- und Video-Schaltvorrichtungen enthält, die in Reihe mit den Audio- bzw. Videosignalleitern geschaltet sind, um diese Leiter wahlweise in den ersten und den zweiten Abschnitt aufzutrennen, so daß eine gleichzeitige und unabhängige Video- und Audio-Signalübertragung zwischen Komponenten möglich ist, welche mit dem gleichen der beiden Abschnitte der Leiter verbunden werden können.

**Revendications**

1. Appareil d'interconnexion pour des composants séparés (10-24; 610-614) d'un système de divertissement à domicile, pour connecter sélectivement un premier groupe de composants, un second groupe de composants et un troisième composant (14, 16, 18; 612) via un seul conducteur de signaux (28, 30, 32; 618, 620, 622) pour transférer un signal d'information produit par l'un desdits composants à au moins un autre desdits composants, comprenant:
un moyen de connexion (36, 38, 40, 42, 44, 46, 48, 50; 626, 628, 630) adapté à un couplage à des composants respectifs pour connecter des entrées et/ou sorties de signaux desdits composants audit seul conducteur en des emplacements distribués le long dudit seul conducteur; et caractérisé par des moyens commutateurs (114, 120, 122, 124, 126, 128, 130; 680; 690; 692) connectés en série avec ledit seul conducteur pour séparer sélectivement ledit conducteur en premier et second segments afin de permettre le transfert simultané et indépendant du signal de l'information parmi des composants connectés au même desdits premier et second segments, et ayant un certain nombre de positions pour sélectivement coupler

a) ledit premier groupe de composants audit second groupe de composants,

b) ledit troisième composant auxdits premier et second groupes,

c) ledit troisième composant à un seul dudit premier groupe de composants et dudit second groupe de composants.

2. Appareil selon la revendication 1, où ledit moyen de commutation est placé à l'un desdits emplacements distribués.

3. Appareil selon la revendication 1 ou la revendication 2 dans lequel ledit système de divertissement à domicile comprend des composants vidéo (10, 12, 14, 16; 610, 612, 614) et ledit seul conducteur transfère le signal vidéo aux entrées du signal vidéo et/ou sorties desdits composants vidéo.

4. Appareil selon la revendication 3 où ledit seul conducteur de signaux (28; 618) a une impédance caractéristique pour transférer un signal vidéo produit par l'un desdits composants (10, 12, 14; 612, 614) à au moins un autre (16; 610) desdits composants; et en ce que ledit moyen de commutation comprend un moyen commutateur en dérivation (117; 682) couplé en dérivation entre ledit conducteur vidéo et sa jonction au moins avec une extrémité dudit premier moyen de commutation et un potentiel de référence (GND) pour appliquer, lorsqu'il est conducteur, une impédance (118; 686) audit conducteur vidéo à ladite jonction afin de réduire la réflexion du signal vidéo par ladite jonction, ledit moyen commutateur en dérivation étant conducteur lorsque ledit moyen commutateur est non conducteur.

5. Appareil selon la revendication 4 pour séparer des composants vidéo d'un système de divertissement à dom cile où ledit moyen de connexion est associé à chacun desdits composants vidéo pour contrôler l'alimentation et/ou la réception du signal vidéo vers ou dudit composant vidéo associé et ledit seul conducteur comprend un trajet de transmission de signaux vidéo (28; 618) ayant des première et seconde extrémités et une impédance caractéristique donnée pour coupler lesdits moyens de connexion en série et transférer lesdits signaux vidéo entre eux; un appareil pour terminer une extrémité dudit trajet de transmission dans ladite impédance caractéristique donnée comprenant:

le moyen de connexion (36, 40, 42; 626, 628, 630) pour un composant vidéo associé (10, 14, 16; 610D, 612, 614) qui est couplé à ladite extrémité, ledit moyen de connexion d'extrémité comprenant un étage d'attaque de signaux vidéo (80, 106; 642, 676) ayant une impédance de sortie sensiblement égale à ladite impédance caractéristique donnée et couplé audit trajet de transmission pour fournir un signal vidéo dudit composant vidéo d'extrémité audit trajet de transmission.

6. Appareil selon la revendication 4 ou la revendication 5 où ledit moyen commutateur en dérivation comprend:

une connexion en série d'une résistance (118'; 686). ayant une impédance sensiblement égale à ladite impédance caractéristique et un commutateur de signaux vidéo sélectivement conducteur (117; 686) couplé entre ledit conducteur vidéo et ledit potentiel de référence.

7. Appareil selon la revendication 6 où ledit moyen commutateur en dérivation (117; 682) est couplé audit conducteur vidéo à sa jonction avec les deux extrémités dudit moyen conducteur.

8. Appareil selon l'une des revendications 4 à 7, où une portion dudit conducteur vidéo (28; 618), l'un respectif dudit moyen de connexion, dudit premier moyen commutateur et dudit moyen commutateur en dérivation sont placés dans un seul boîtier.

9. Appareil selon la revendication 8, où ledit boîtier est adapté à transmettre et/ou recevoir des signaux vidéo d'autres composants vidéo dudit système de divertissement via lesdits premier et second segments dudit conducteur vidéo; et ledit moyen commutateur en dérivation est couplé aux extrémités desdits premier et second segments dudit conducteur vidéo placé dans ledit boîtier.

10. Appareil selon la revendication 5, dans lequel ledit moyen de connexion d'extrémité comprend un agencement commutateur (110; 646) ayant une première position pour coupler le signal vidéo dudit composant vidéo d'extrémité à l'entrée dudit étage d'attaque de signaux vidéo pour fournir le signal vidéo dudit composant vidéo d'extrémité audit trajet de transmission, et une seconde position pour coupler un premier potentiel de référence (GND) à ladite entrée dudit étage d'attaque vidéo afin de maintenir ladite impédance caractéristique donnée en tant que ladite impédance de sortie pour terminer ledit trajet de transmission dans ladite impédance caractéristique donnée lorsque ledit étage d'attaque vidéo ne fournir par le signal vidéo audit trajet de transmission.

11. Appareil selon la revendication 10, dans lequel ledit commutateur est forcé à être dans ladite seconde position lorsqu'un signal vidéo est reçu par ledit composant vidéo d'extrémité dudit trajet de transmission.

12. Appareil selon la revendication 1, dans lequel ledit système de divertissement à domicile comprend des composants audio (20; 22; 24) et vidéo (10; 12; 14; 16) et ledit seul conducteur transfère les signaux audio entre les entrées et sorties audio des composants audio et vidéo.

13. Appareil selon la revendication 12, dans lequel les entrées et/ou sorties de signaux audio de tous lesdits composants audio sont connectées audit conducteur audio (30; 620) le long d'une première portion dudit conducteur et les entrées et/ou sorties de signaux audio de tous lesdits composants vidéo sont connectées audit conducteur audio le long d'une seconde portion dudit conducteur.

14. Appareil selon la revendication 13, dans lequel ledit moyen commutateur comprend un premier commutateur audio (120, 124, 128; 690) connecté en série avec ledit conducteur de signaux audio (30; 620) et placé à l'un desdits emplacements distribués de manière que lesdites première et seconde portions dudit conducteur de signaux audio correspondent auxdits premier et second segments.

15. Appareil selon la revendication 14, dans lequel ledit signal audio comprend des signaux audio stéréophoniques gauche et droit, ledit premier conducteur de signaux audio mentionné pour transférer ledit signal audio gauche vers lesdits composants; et comprenant de plus un second conducteur simple (32; 622) pour transférer ledit signal audio stéréophonique droit auxdits composants dudit système de divertissement.

16. Appareil selon la revendication 15, dans lequel ledit moyen commutateur audio comprend un second commutateur audio (122, 126, 130; 692) en série avec ledit second conducteur audio; et lesdits premier et second commutateurs séparent sélectivement lesdits premier et second conducteurs audio mentionnés, concurremment.

17. Appareil selon la revendication 16, dans lequel lesdits premier et second commutateurs audio sont tous placés aux mêmes desdits emplacements distribués et fonctionnent concurremment pour séparer sélectivement lesdits conducteurs de signaux audio.

18. Appareil selon l'une quelconque des revendications 14 à 17 où les entrées et/ou sorties de signaux d'un composant amplificateur du signal audio sont connectées audit conducteur du signal audio audit emplacement distribué.

19. Appareil selon l'une quelconque des revendications 14 à 18, où les entrées et/ou sorties de signaux audio d'un moniteur de télévision (16), comprenant des portions d'amplificateur de signaux audio interne et de haut-parleur, sont connectées audit conducteur de signaux audio (30; 32) en un emplacement distribué adjacent audit premier emplacement distribué.

20. Appareil selon l'une quelconque des revendications 12 à 19, qui comprend un second conducteur simple de signaux (28; 618) pour transférer un signal vidéo produit par l'un desdits composants vidéo à au moins un autre desdits composants vidéo;

ledit moyen de connexion associé auxdits composants vidéo reliant les entrées et/ou sorties du signal vidéo desdits composants vidéo audit conducteur de signaux vidéo en des emplacements distribués le long dudit conducteur de signaux vidéo; et un moyen commutateur vidéo (114; 680) placé en série avec ledit conducteur de signaux vidéo pour séparer sélectivement ledit conducteur vidéo en premier et second segments de conducteur vidéo afin de permettre un transfert simultané et indépendant de signaux vidéo parmi lesdits composants vidéo connectés auxdits premier et second segments du conducteur vidéo.

21. Appareil selon la revendication 20, dans lequel ledit moyen commutateur vidéo est placé à l'un desdits emplacements distribués dudit conducteur vidéo.

22. Appareil selon la revendication 21, où ledit emplacement distribué est associé à un moyen prédéterminé de connexion placé adjacent au moyen de connexion associé à deux autres composants vidéo (12, 16; 610, 614).

23. Appareil d'interconnexion selon la revendication 1, adapté au transfert de signaux audio et vidéo entre des composants audio et vidéo séparés d'un système de divertissement à domicile, où ledit seul conducteur de signaux est agencé en première et seconde portions respectivement, comprenant un seul conducteur de signaux (30; 32) adapté au transfert d'un signal audio produit par l'un desdits composants (16; 20; 22; 24) à au moins un autre desdits composants; et

un seul conducteur de signaux (28) adapté au transfert d'un signal vidéo produit par l'un desdits composants vidéo (10; 12; 14; 16) à au moins un autre desdits composants vidéo,

ledit moyen de connexion étant adapté à être associé à certains des composants audio et vidéo pour connecter les entrées et/ou sorties de signaux audio et/ou vidéo desdits composants auxdits conducteurs de signaux audio et vidéo, respectivement;

et ledit moyen commutateur comprenant un moyen commutateur audio et vidéo connecté en série auxdits conducteurs de signaux audio et vidéo, respectivement, pour séparer sélectivement lesdits conducteurs en lesdits premier et second segments afin de permettre un transfert simultané et indépendant vidéo et audio parmi les composants adaptés à être connectés aux mêmes desdits premier et second segments desdits conducteurs.

Fig. 1

*Fig. 2*

**Fig. 3**

Fig. 4

Fig. 5

Fig.6.

Fig. 7.

Fig. 8.